# EUROPÄISCHE PATENTSCHRIFT

(11) **EP 3 100 872 B1**
(45) Veröffentlichungstag und Bekanntmachung des Hinweises auf die Patenterteilung: **31.01.2018**
(21) Anmeldenummer: 16156798.7
(22) Anmeldetag: 23.02.2016
(51) Int. Cl.: B60C 11/13, B60C 11/11

(54) **FAHRZEUGLUFTREIFEN**
PNEUMATIC TYRES FOR A VEHICLE
PNEUMATIQUES DE VÉHICULE

(30) Priorität: 01.06.2015 DE 102015210044
(43) Veröffentlichungstag der Anmeldung: 07.12.2016
(73) Patentinhaber: Continental Reifen Deutschland GmbH, 30165 Hannover (DE)
(72) Erfinder: Vellinga-Wallenhauer, Marieken, 30982 Pattensen (DE); Heinhaupt, Torsten, 29313 Hambühren (DE)
(74) Vertreter: Finger, Karsten

(56) Entgegenhaltungen:
- EP-A1- 2 447 091
- DE-A1-102006 052 740
- US-A1- 2014 360 641
- US-B1- 6 250 354

## Beschreibung

Die Erfindung betrifft einen Fahrzeugluftreifen mit einem profilierten Laufstreifen mit Profilelementen, die durch eine Rille voneinander getrennt sind, wobei die Rille in radialer Richtung R nach innen hin von einem Rillengrund und beiderseits des Rillengrundes jeweils von einer Rillenwand begrenzt wird, wobei das Profilelement in radialer Richtung nach außen hin durch eine die Bodenkontaktfläche bildende radial äußere Oberfläche und zur Rille hin durch eine eine Rillenwand der Rille bildende Flanke begrenzt wird, welche in radialer Richtung R ausgehend vom Rillengrund der Rille bis zur radial äußeren Oberfläche erstreckt ist, wobei längs der Erstreckung der Rille in der Flanke des Profilelementes hintereinander verteilt angeordnet Nuten ausgebildet sind, welche sich ausgehend von der radial äußeren Oberfläche in radialer Richtung R nach innen hin bis in einen in radialer Richtung R gemessenen Abstand h vom Rillengrund erstrecken und dort enden, wobei die Nut längs ihrer Erstreckung ausgehend von der radial äußeren Oberfläche nach innen hin mit einem Nutgrund und beiderseits des Nutgrundes jeweils von einer Nutflanke begrenzt wird, wobei die Kontur des Nutgrundes ein Dreieck mit den Dreieckspunkten A,B,C und den Dreieckseiten AB, AC, BC bildet, wobei Seite BC mit einer Seitenlänge a, die Seite AC mit einer Seitenlänge b und die Seite AB mit einer Seitenlänge c ausgebildet ist, wobei die Seite BC in der radial äußeren Oberfläche ausgebildet ist, wobei AB die erste Nutflanke und AC die zweite Nutflanke zum Nutgrund hin begrenzt.

Derartige Fahrzeugluftreifen sind bekannt.

Es ist bekannt, Fahrzeugluftreifen auszubilden, bei denen die Laufstreifenprofile mit Profilblockelementen ausgebildet sind, die durch Rillen voneinander getrennt sind. Die Rillen sollen dabei den Abfluss des Wassers aus dem Profil ermöglichen. Die durch die Profilblockelementflanken gebildeten Rillenwände bilden zusätzliche Griffkanten, die im Wesentlichen senkrecht zur Rillenerstreckungsrichtung Kräfte übertragen können und dadurch den Griff verbessern. Die Rillenwände sind dabei meist als glatte, seitliche Profilblockelementflanken ausgebildet, welche in der radial äußeren Oberfläche gradlinige Kanten bilden. Hierdurch kann zwar zusätzliche Traktion im Wesentlichen senkrecht zur Rillenerstreckungsrichtung ermöglicht werden. Allerdings bieten diese Ausbildungen keine zusätzliche Traktion in Längserstreckungsrichtung der Rille, wodurch die Traktionsfähigkeit - beispielsweise auf Schnee und Matsch - noch beschränkt ist.

Es ist auch bekannt in Rillenwänden durch Versatz einzelner, hintereinander längs der Rillenerstreckung ausgebildeter Rillenerstreckungsabschnitte in Richtung senkrecht zur Rille hin, zusätzlichen Griff zu ermöglichen. Diese Ausbildungen ermöglichen zwar durch ihren längs der Rillenerstreckung ausgebildeten zick-zack-ähnlichen Verlauf einen besseren Griff durch den Versatz und die hierdurch gebildeten zusätzlich Griffkanten. Eine Verbesserung des Schneegriffs erfolgt dabei im Wesentlichen durch diese zusätzlichen Griffkanten. Eine für einen optimalen Schneegriff ebenfalls wünschenswerte formschlüssig wirkende Verdichtung des Schnees im Profil wird hierdurch jedoch nicht begünstigt. Der üblicher Weise bei derartigen Ausbildungen bis in den Rillengrund hin reichend ausgebildete Versatz behindert darüber hinaus die Wasserströmung und beeinträchtigt somit den Abfluss des Wassers. Eine derartige Ausbildung ist beispielsweise aus der DE102007016113A1 bekannt.

Aus der DE60209758T2 ist es bekannt, in der Rillenwand im Übergang zwischen Rillenflanke und radial äußerer Oberfläche einzelne Einkerbungen auszubilden, welche sich in radialer Richtung nur geringfügig in radialer Richtung des Reifens in die Rille hinein erstrecken und dabei sehr nahe der radial äußeren Oberfläche enden. Aus diesem Dokument sind dabei auch derartige Einkerbungen bekannt mit einer Einkerbungswand, die von der Rille aus gesehen die Einkerbung nach innen hin begrenzt und die eine erste dreieckige Begrenzungsfläche bildet. Die Einkerbung ist in radialer Richtung R des Reifens nach innen hin durch eine zweite dreieckige Begrenzungsfläche begrenzt und in Erstreckungsrichtung der Rille gesehen durch eine rechteckige Begrenzungsfläche. Die erste dreieckige Begrenzungsfläche ist mit ihrer längsten Seite in der radialäußeren Oberfläche ausgebildet. Die andern beiden Seiten des Dreiecks schließen einen stumpfen Winkel ein, wobei eine der anderen beiden Seiten mit der ersten, in der radial äußeren Oberfläche ausgebildeten Seite des Dreiecks einen sehr spitzen Winkel einschließt. Auf diese Weise kann die lediglich im unmittelbaren Nahbereich der radial äußeren Oberfläche ausgebildete Einkerbung zumindest beim Neureifen mittels der durch die Einkerbung erzeugten, zusätzlichen Kanten etwas verbesserten Griff auf Schnee erzeugen. Die lediglich oberflächliche Einkerbung mit ihrer ersten Dreiecksfläche mit sehr spitzem Winkel von 3° bis 5° und dem sehr großen stumpfen Winkel auf der von der radial äußeren Oberfläche wegweisenden Seite wird jedoch eine formschlüssig wirkende Verdichtungswirkung des Schnees nicht ermöglicht. Die Schnee-Schnee-Reibung wird hierdurch nicht begünstigt.

**Aus der** EP 2447091 A1 **ist ein Fahrzeugluftreifen gemäß den Merkmalen des Oberbegriffs von Anspruch 1 bekannt.**

Der Erfindung liegt die Aufgabe zugrunde, bei derartigen Fahrzeugluftreifen mit einfachen Mitteln einen guten Wasserabfluss aus den Rillen mit verbessertem Schneegriff zu ermöglichen.

Die Aufgabe wird erfindungsgemäß durch die Ausbildung eines Fahrzeugluftreifens mit einem profilierten Laufstreifen mit Profilelementen, die durch eine Rille voneinander getrennt sind, wobei die Rille in radialer Richtung R nach innen hin von einem Rillengrund und beiderseits des Rillengrundes jeweils von einer Rillenwand begrenzt wird, wobei das Profilelement in radialer Richtung nach außen hin durch eine die Bodenkontaktfläche bildende radial äußere Oberfläche und zur Rille hin durch eine eine Rillenwand der Rille bildende Flanke begrenzt wird, welche in radialer Richtung R ausgehend vom Rillengrund der Rille bis zur radial äußeren Oberfläche erstreckt ist, wobei längs der Erstreckung der Rille in der Flanke des Profilelementes hintereinander verteilt angeordnet Nuten ausgebildet sind, welche sich ausgehend von der radial äußeren Oberfläche in radialer Richtung R nach innen hin bis in einen in radialer Richtung R gemessenen Abstand h vom Rillengrund erstrecken und dort enden, wobei die Nut längs ihrer Erstreckung ausgehend von der radial äußeren Oberfläche nach innen hin mit einem Nutgrund und beiderseits des Nutgrundes jeweils von einer Nutflanke begrenzt wird, wobei die Kontur des Nutgrundes ein Dreieck mit den Dreieckspunkten A,B,C und den Dreieckseiten AB, AC, BC bildet, wobei Seite BC mit einer Seitenlänge a, die Seite AC mit einer Seitenlänge b und die Seite AB mit einer Seitenlänge c ausgebildet ist, wobei die Seite BC in der radial äußeren Oberfläche ausgebildet ist, wobei AB die erste Nutflanke und AC die zweite Nutflanke zum Nutgrund hin begrenzt, gemäß den Merkmalen von Anspruch 1 gelöst, bei dem der Abstand h mit (1/6)T_{R} ≤h≤ (0,3T_{R}) ausgebildet ist, wobei T_{R} die Rillentiefe im Erstreckungsabschnitt der Nut ist, und bei dem der zwischen den Seiten BC und AC eingeschlossene Winkel γ mit γ ≥ 30° und der zwischen BC und AB eingeschlossene Winkel β mit β ≥ 30° ausgebildet ist, **wobei die Kontur der ersten Nutflanke ein Dreieck bildet mit den Dreieckspunkten B,A und E und den Dreieckseiten BA, BE und AE, wobei BE mit einer Seitenlänge e ausgebildet ist und die Schnittkontur zwischen erster Nutflanke und Flanke des Profilelementes bildet und wobei AE mit einer Seitenlänge d ausgebildet ist.**

Die Ausbildung ermöglicht, dass sich der Schnee in der konisch zum Rillengrund hin verjüngenden Nut wie in einer Tasche fängt und dabei verdichtet wird. Die bis tief in den radialen Erstreckungsabschnittbereich der Rille sich erstreckende Nut ermöglicht hierdurch eine Verbesserung der Schnee-Schnee-Reibung und aufgrund ihrer Nutflanken eine Bereitstellung zusätzlicher Griffkanten, wodurch der zusätzliche Griff auf Schnee unter Nutzung sowohl der verbesserten Schnee-Schnee-Reibung als auch der durch die Bereitstellung der zusätzlichen Griffkanten über den üblicherweise für Reifen mit Wintereigenschaften ausgelegten Lebensabschnitt eines Reifens verbessert ausgebildet werden kann. Dennoch kann aufgrund der Ausbildung der Nuterstreckung bis in den Abstand h vom Rillengrund sichergestellt werden, dass der radial innere Erstreckungsabschnitt der Rille frei von Strömungshindernissen ausgebildet und somit der Wasserabfluss verbessert werden kann. Somit kann mit einfachen Mitteln der Griff auf Schnee, Matsch und ähnlichen Untergründen weiter verbessert und der Wasserablauf zuverlässig gesichert werden.

**Durch die Ausbildung der Kontur der ersten Nutflanke kann in besonders einfacher Weise ein geringer Strömungswiderstand und somit ein guter Wasserabfluss bei großer wirksamer, radial äußerer Oberfläche umgesetzt werden, wodurch gute Eistraktion, gute Trockenbrems- und Trockenhandlingeigenschaften und guter Abrieb begünstigt werden.**

Besonders vorteilhaft ist die Ausbildung eines Fahrzeugreifens gemäß den Merkmalen von Anspruch **2,** wobei die Kontur der zweiten Nutflanke ein Viereck bildet mit den Viereckpunkten C,A,E und F und mit den Viereckseiten AC, AE, CF und EF, wobei EF mit einer Seitenlänge f ausgebildet ist und die Schnittkontur zwischen zweiter Nutflanke und Flanke des Profilelementes bildet und wobei CF mit einer Seitenlänge g ausgebildet ist und die Schnittkontur zwischen zweiter Nutflanke und radial äußerer Oberfläche des Profilelementes bildet. Hierdurch kann in einfacher Weise über die radiale Erstreckung der Nut hinweg eine besonders wirksame Tasche zur Aufnahme und Verdichtung von Schnee, Matsch u.ä. und eine hohe Matsch- und Schneereibung umgesetzt werden. Der Griff auf Matsch, Schnee u.ä. kann somit weiter verbessert werden. Darüber hinaus kann hierdurch in der radial äußeren Oberfläche durch die Seite CF eine besonders wirksame Griffkante zur Verfügung gestellt werden.

Besonders vorteilhaft ist die Ausbildung eines Fahrzeugreifens gemäß den Merkmalen von Anspruch **3,** wobei die Seitenlängen g und d mit g > d ausgebildet sind. Hierdurch kann in einfacher Weise umgesetzt werden, dass der Schnee bzw. Matsch mit zunehmender Tiefe der Nut stärker verdichtet und somit die Schneereibung weiter erhöht wird. Dies begünstigt eine weitere Verbesserung von Schneetraktion und der Schneebremseigenschaften.

Besonders vorteilhaft ist die Ausbildung eines Fahrzeugreifens gemäß den Merkmalen von Anspruch **4,** wobei der von den Seiten BE und AB eingeschlossene Winkel δ mit 2°≤δ≤10° ausgebildet ist. Hierdurch kann in einfacher Weise die Dreicksfläche groß genug ausgebildet werden zur Erzielung ausreichender Taschenwirkung und dabei dennoch klein genug zur Minimierung des Strömungswiderstandes und somit zur Verbesserung des Wasserabflusses.

Besonders vorteilhaft ist die Ausbildung eines Fahrzeugreifens gemäß den Merkmalen von Anspruch **5,** wobei die Schnittkontur der Nut in der radial äußeren Oberfläche aus den Seiten BC und CF gebildet ist, welche einen Winkel ζ mit 70°≤ζ ≤150° einschließen. Die Ausbildung ermöglicht eine einfache Umsetzung mit hoher Steifigkeit des zwischen Nutflanken und Flanke des Profilelementes ausgebildeten Profilelementmaterials zur sicheren Übertragung von Kräften und mit ausreichend hoher Stabilität, um dem in die Tasche eindringenden Schnee Widerstand zu bieten, wodurch die Traktion auf Schnee weiter verbessert werden kann.

Besonders vorteilhaft ist die Ausbildung eines Fahrzeugreifens gemäß den Merkmalen von Anspruch **6,** wobei die längs der Erstreckung der Rille hintereinander in der Flanke des Profilelementes ausgebildeten Nuten unmittelbar hintereinander angeordnet sind und dabei mit ihrer Schnittkontur in der radial äußeren Oberfläche insbesondere einen zickzackförmigen Verlauf bilden. Hierdurch kann in einfacher Weise der Griff auf Schnee, Matsch oder ähnlichem losem Untergrund durch besonders hohe Griffkantenzahl weiter verbessert werden.

Besonders vorteilhaft ist die Ausbildung eines Fahrzeugreifens gemäß den Merkmalen von Anspruch **7,** wobei die Profilelemente Profilblockelemente sind.

Die Erfindung wird im Folgenden an Hand der in den Figuren 1 bis 8 dargestellten Ausführungsbeispiele näher erläutert. Hierin zeigen
- Fig.1: einen Ausschnitt eines Laufstreifenprofils für Personenkraftwagen in Draufsicht,
- Fig.2: eine vergrößerte Darstellung eines Profilblockelementes von Fig.2 in Draufsicht,
- Fig.3: das Profilblockelement von Fig.2 in perspektivischer Darstellung,
- Fig.4: das Profilblockelement von Fig.2 in Schnittdarstellung gemäß Schnitt IV-IV von Fig.2 mit Blick auf eine Profilblockelementflanke zur Darstellung der in der Profilblockelementflanke ausgebildeten Nuten,
- Fig.5: die Darstellung eines Nutgrundes einer Nut von Fig.4 mit Blick senkrecht auf die Nutgrundfläche,
- Fig.6: die Darstellung der Nut von Fig.5 und Fig.4 zur Erläuterung der einen Nutflanke mit Blick senkrecht auf die Nutflanke,
- Fig.7: die Darstellung der Nut von Fig.5 und Fig.4 zur Erläuterung der anderen Nutflanke mit Blick senkrecht auf diese Nutflanke und
- Fig.8: eine Darstellung eines Ausschnitts eines Laufstreifenprofiles mit Profilblockreihen in Draufsicht.

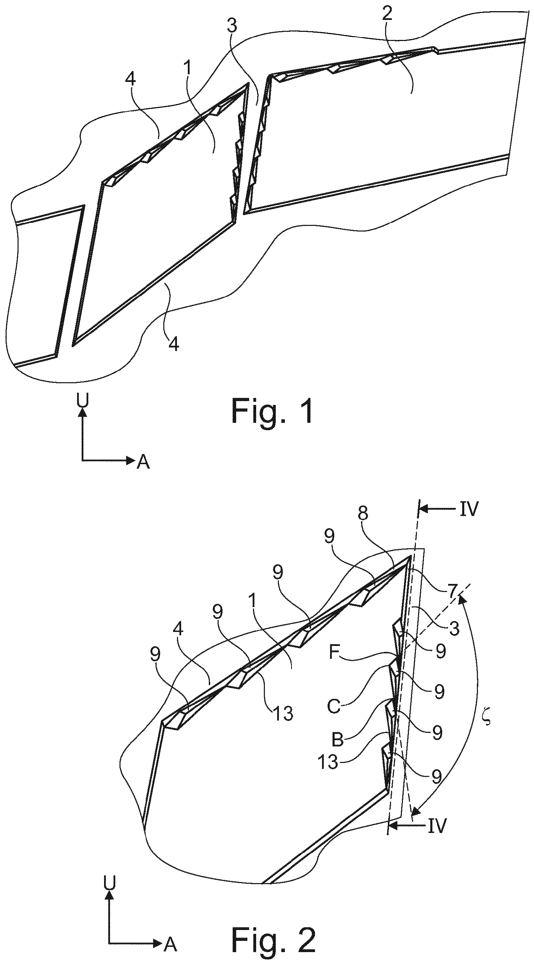

Die Figuren 1 und 2 zeigen einen Ausschnitt eines Laufstreifenprofiles für Personenkraftwagen mit in axialer Richtung A des Fahrzeugluftreifens nebeneinander angeordneten Profilblockelementen 1 und 2 bekannter Art. Die Profilblockelemente 1 und 2 sind in axialer Richtung A des Fahrzeugluftreifens durch eine über den Umfang des Fahrzeugluftreifens erstreckte und in Umfangsrichtung U ausgerichtete Umfangsrille 3 voneinander getrennt. Das Profilblockelemente 1 ist in Umfangsrichtung U des Fahrzeugluftreifens gesehen zu beiden Seiten hin jeweils durch eine Querrille 4 von einem in Umfangsrichtung U des Fahrzeugluftreifens - in Figur 1 nicht dargestellten - benachbart angeordneten Profilblockelementen 1 getrennt. Das Profilblockelement 2 ist in Umfangsrichtung U des Fahrzeugluftreifens zu beiden Seiten hin jeweils durch eine Querrille 4 von einem in Umfangsrichtung U des Fahrzeugluftreifens - in Figur 1 nicht dargestellten - benachbart angeordneten Profilblockelementen 2 getrennt. Die Rillen 3 und 4 sind in radialer Richtung R des Fahrzeugluftreifens nach innen hin jeweils durch einen Rillengrund 5 begrenzt. Der Rillengrund 5 der Umfangsrille 3 erstreckt sich dabei in Erstreckungsrichtung der Umfangsrille 3 über den gesamten Umfang des Fahrzeugluftreifens. Der Rillengrund 5 der Querrille 4 erstreckt sich dabei längs der Erstreckung der Querrille 4 über deren gesamte Erstreckung.

Die Umfangsrille 3 ist beiderseits ihres Rillengrundes 5 jeweils durch eine Rillenwand begrenzt. Die Querrille 4 ist jeweils beiderseits ihres Rillengrundes 5 jeweils durch eine Rillenwand begrenzt.

Die Profilblockelemente 1 und 2 sind in radialer Richtung R nach außen hin- in bekannter Weise - durch eine, die Bodenkontaktoberfläche bildende radial äußere Oberfläche 6 begrenzt.

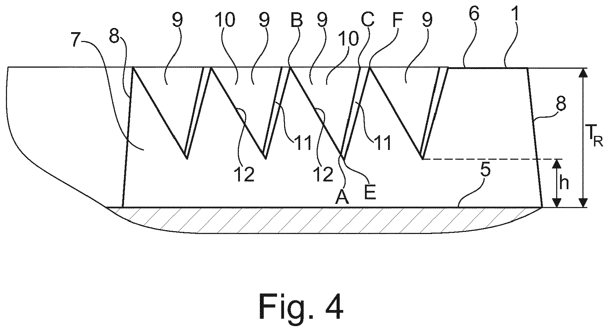

Wie in den Figuren 1, 2, 3 und 4 dargestellt ist, ist das Profilblockelement 1 an seiner zur Umfangsrille 3 hinweisenden Seite durch eine Profilblockelementflanke 7 begrenzt, welche sich längs der Erstreckung der Umfangsrille 3 von der einen das Profilblockelement 1 begrenzenden Querrille 4 bis zur anderen das Profilblockelement 1 begrenzenden Querrille 4 und in radialer Richtung R ausgehend von dem die Umfangsrille 3 begrenzenden Rillengrund 5 bis zu der das Profilblockelement 1 in radialer Richtung R nach außen hin begrenzenden radial äußeren Oberfläche 6 erstreckt. In entsprechender Weise ist das Profilblockelement 1 auf seiner in Umfangsrichtung U zur angrenzenden Querrille 4 hin jeweils durch eine Profilblockelementflanke 8 begrenzt, welche sich ausgehend von der Umfangsrille 3 längs der Erstreckung der Querrille 4 über die gesamte Erstreckung des Profilblockelementes 1 bis zur nächsten, das Profilblockelement 1 in axialer Richtung A begrenzenden Umfangsrille und in radialer Richtung R ausgehend von dem die Querrille 4 in radialer Richtung R nach innen hin begrenzenden Rillengrund 5 bis zu der das Profilblockelement 1 in radialer Richtung R nach außen begrenzenden radial äußeren Oberfläche 6 erstreckt.

Die Profilblockelementflanke 7 des Profilblockelement 1 bildet dabei die zum Profilblockelement 1 hingerichtete Rillenwand der Umfangsrille 3. Die Profilblockelementflanke 8 bildet dabei die zum Profilblockelement 1 hingerichtete Rillenwand der Querrille 4.

Wie in den Figuren 1 bis 4 dargestellt ist, sind längs der Erstreckung der Umfangsrille 3 in der Rillenflanke 7 mehrere in Umfangserstreckungsrichtung hintereinander angeordnete Nuten 9 ausgebildet, welche sich in der Flanke 7 jeweils ausgehend von der radial äußeren Oberfläche 6 bis zu einem in der Flanke 7 ausgebildeten Punkt E, welcher in einem in radialer Richtung R gemessenen Abstand h vom Rillengrund der Rille 5 angeordnet ist, erstrecken und dort enden.

Die Umfangsrille 3 ist mit einer Rillentiefe T_{R} ausgebildet, welche den in radialer Richtung R gemessenen Abstand zwischen radial äußerer Oberfläche 6 der an die Rille 3 angrenzenden Profilblockelemente 1 und 2 und dem Rillengrund 5 der Rille 3 angibt.

Im Punkt E nimmt die Nut 9 in der Rillenflanke 7 ihren in radialer Richtung R gemessenen kleinsten Abstand h zum Rillengrund 5 ein. Der Abstand h ist mit (1/6)T_{R}≤h≤ (0,3 T_{R}) ausgebildet. Beispielsweise ist T_{R}=9,9mm und h=2,0mm ausgebildet.

Wie in den Figuren 2 bis 7 dargestellt ist, ist die Nut 9, die sich von der radial äußeren Oberfläche 6 in radialer Richtung R nach innen in der Flanke 7 bis zum Punkt E erstreckt, auf ihrer von der Umfangsrille 3 wegweisenden Seite mit einem Nutgrund 10, der sich ebenfalls von der radial äußeren Oberfläche 6 ausgehend in radialer Richtung R nach innen erstreckt, und beiderseits des Nutgrundes 10 jeweils mit einer Nutflanke 11 bzw. 12 begrenzt, welche sich jeweils ausgehend von der radial äußeren Oberfläche längs der Erstreckung des Nutgrundes 10 in radialer Richtung R nach innen und vom Nutgrund 10 ausgehend in Richtung zur Umfangsrille 3 hin bis zur Flanke 7 erstreckt.

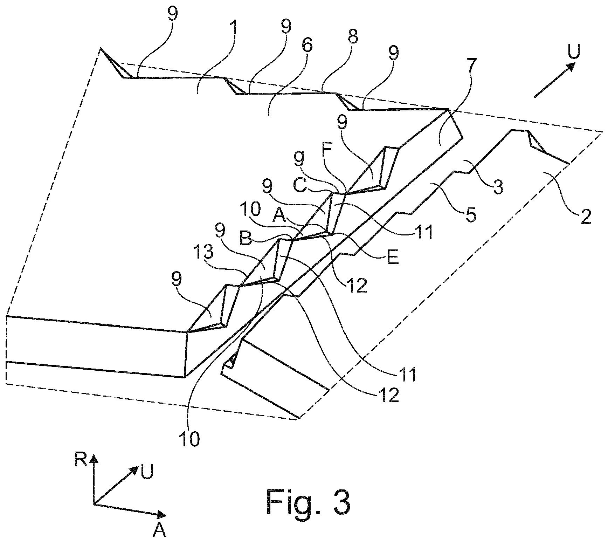

Wie in den Figuren 3, 4 und 5 dargestellt ist, bildet der Nutgrund 10 eine dreieckige Fläche, deren Dreieck mit den Dreieckspunkten A, B und C sowie mit den Dreiecksseiten AB, BC und AC ausgebildet ist. Die Seite BC verbindet die Punkte B und C geradlinig und ist mit einer Seitenlänge a ausgebildet. Die Seite AC verbindet die Punkte A und C geradlinig und ist mit einer Seitenlänge b ausgebildet. Die Seite AB verbindet die Punkte A und B geradlinig und ist mit einer Seitenlänge c ausgebildet. Die Punkte B und C und somit die Seite BC mit ihrer Seitenlänge a liegen in der radialäußeren Oberfläche 6. Der Dreieckspunkt A bildet den am weitesten von der radialäußeren Oberfläche 6 entfernt angeordneten Punkt des Nutgrundes 10. Die Seiten AB und BC schließen im Dreieck um den Punkt B einen Winkel β miteinander ein. Die Seiten BC und AC schließen im Dreieck um den Punkt C einen Winkel γ miteinander ein. Die Seiten AB und AC schließen im Dreieck um den Punkt A einen Winkel α miteinander ein.

Die Winkel β und γ sind dabei mit β≥30° und γ≥30° gewählt ausgebildet. Beispielsweise ist β=35° und γ=89° gewählt.

Wie in den Figuren 3,4 und 6 dargestellt ist, ist die erste Nutflanke 12 als dreieckige Fläche mit den Dreieckspunkten B, A und E sowie mit den Dreiecksseiten AB, AE und BE ausgebildet. Die Seite AE verbindet die Punkte A und E geradlinig und ist mit einer Seitenlänge d ausgebildet. Die Seite BE verbindet die Punkte B und E geradlinig und ist mit einer Seitenlänge e ausgebildet. Der Punkt B liegt dabei sowohl in der radial äußeren Oberfläche 6 als auch in der Flanke 7, die Seite BE liegt in der Flanke 7 und bildet die Schnittlinie zwischen Nutflanke 12 und der Flanke 7 des Profilblockelementes 1. Die Seiten BE und AB schließen im Dreieck um den Punkt B einen Winkel δ ein mit 2°≤δ≤10°. Beispielsweise ist δ=5,9° ausgebildet. Der im Dreieck zwischen den Seiten AB und AE um den Punkt A ausgebildete Winkel ist mindestens 80° und höchstens 120° groß - beispielsweise 90,7° groß - gewählt.

Wie in den Figuren 3, 4 und 7 dargestellt ist, bildet die zweite Nutflanke 11 eine viereckig ausgebildete Fläche, mit den vier Eckpunkten A, C, F und E sowie mit den Seiten AC, AE, EF und CF. Die Seite EF verbindet die Punkte E und F geradlinig und ist mit einer Seitenlänge f ausgebildet. Die Seite CF verbindet die Punkte C und F geradlinig und ist mit einer Seitenlänge g ausgebildet. Der Punkt F liegt dabei sowohl in der radial äußeren Oberfläche 6 als auch in der Flanke 7. Die Seite EF liegt in der Flanke 7 und bildet die Schnittfläche zwischen Flanke 7 des Profilblockelementes 1 und der zweiten Nutflanke 11. Die Seite CF liegt in der radial äußeren Oberfläche 7 und bildet dabei die Schnittlinie der zweiten Nutflanke 11 mit der radial äußeren Oberfläche 6.

Die Seite AE bildet sowohl eine Seite der zweiten Nutflanke 11 als auch eine Seite der ersten Nutflanke 12. Die Seite AC bildet sowohl eine Seite des Nutgrundes 10 als auch eine Seite der zweiten Nutflanke 11. Die Seite AB bildet sowohl eine Seite des Nutgrundes 10 als auch eine Seite der ersten Nutflanke 12.

Die zweite Nutflanke 11 ist dabei derart ausgebildet, dass die Seitenlänge g der Seite CF größer ist als die Seitenlänge d der Seite AE. Längs der radialen Erstreckung von außen nach innen hin wird die viereckförmig ausgebildete zweite Nutflanke 11 kontinuierlich schmaler. Die erste Nutflanke 12 wird ausgehend von der Seite AE längs ihrer radialen Erstreckung nach außen hin bis zum Punkt B in der radial äußeren Oberfläche 6 kontinuierlich schmaler. Die Seitenlänge g der Seite CF ist beispielsweise mit g=1mm und die Seitenlänge d der Seite AE mit d=0,7mm ausgebildet.

Wie in Fig.2 und Fig.3 zu erkennen ist, bildet die Schnittkontur der Nut 9 mit der radialäußeren Oberfläche 6 mit ihren, die Punkte A und C verbindende Strecke AC und ihrer die Punkte C und F verbindende Strecke CF einen V-Förmigen Verlauf. Die längs der Erstreckung der Umfangsrille 3 unmittelbar hintereinander angeordneten Nuten 9 sind dabei so hintereinander positioniert angeordnet, dass jeweils der Punkt F der einen Nut gleichzeitig den Punkt B der nachfolgend angeordneten Nut 9 bildet. Hierdurch bilden die längs der Erstreckung der Umfangsrille 3 hintereinander angeordneten Nuten 9 einen Zick-Zack-Förmigen Schnittkonturverlauf 13 mit der radial äußeren Oberfläche 6. Die zweite Nutflanke 11 der Nuten 9 bildet dabei mit ihren Seiten CF und EF jeweils zusätzliche Griffkanten zum Greifen auf Schnee. Die Nut 9 bildet in der Flanke 7 des Profilblockelementes 1 eine sich bis zum Punkt E in radialer Richtung R nach innen hin kontinuierlich verjüngende Tasche zur Aufnahme und Verdichtung von Schnee. Beim Eindringen von Schnee ermöglicht die Verdichtung eine formschlüssige Verbindung zwischen Nut 9 und Schnee.

Wie in Fig.2 dargestellt ist, schließen die Seiten BC und CF in der Nut 9 um den Punkt C einen Winkel ζ ein mit 70°≤ζ≤150°. Beispielsweise ist ζ=135° gewählt.

In analoger Weise sind in einem Ausführungsbeispiel - wie in den Figuren 1 bis 3 dargestellt ist - zusätzlich auch in der das Profilblockelement 1 zu einer Rille 4 hin begrenzende Flanke 8 entsprechende Nuten 9 ausgebildet, welche sich in radialer Richtung R ausgehend von der radial äußeren Oberfläche 6 des Profilblockelementes 1 bis in einen Abstand h vom Nutgrund 5 der Querrille 4 erstrecken.

In einem Ausführungsbeispiel sind dabei jeweils die zweiten Nutflanken 11 und die ersten Nutflanken 12 der in der Flanke 8 ausgebildeten Nuten 9 so gewählt positioniert, dass jeweils die zweite Nutflanke 12 einer Nut 9 die Nut 9 in axialer Richtung A nach innen zur Äquatorebene Ä-Ä des Reifens hin und die erste Nutflanken 12 einer Nut 9die Nut 9 in axialer Richtung A zur nächst gelegenen Reifenschulter hin begrenzen.

In einem anderen - nicht dargestellten - Ausführungsbeispiel sind in analoger Weise auch in der zweiten das Profilblockelement 1 in Umfangsrichtung U zur anderen Seite hin begrenzenden Rillenflanke 8 entsprechende Nuten 9 ausgebildet.

Wie in Figur 3 dargestellt ist, ist in einer weiteren alternativen Ausführung auch das in axialer Richtung A die Umfangsrille 3 hin begrenzende Profilblockelement 2 an ihrer zur Rille 3 hingerichteten Flanke mit entsprechenden Nuten 9 ausgebildet, wobei die Nuten 9 in dieser Flanke des Profilblockelementes 1 so ausgebildet sind, dass die zweiten Nutflanken llihrer Nuten 9 die jeweilige Nut 9 genau in die entgegengesetzte Umfangsrichtung U hin begrenzen wie die zweiten Nutflanken 11 der in der Flanke 7 ausgebildeten Nuten 9.

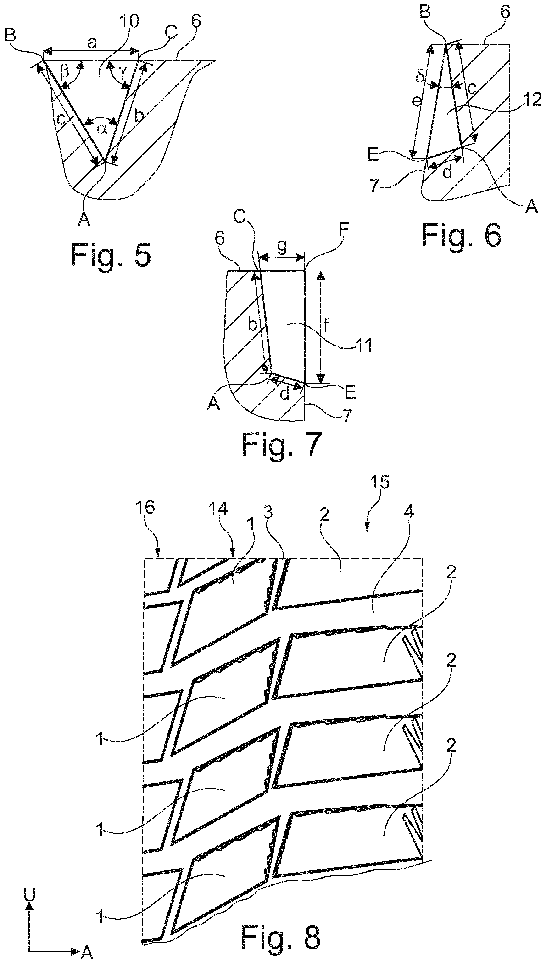

Figur 8 zeigt einen Ausschnitt eines Laufstreifenprofiles mit in axialer Richtung A des Fahrzeugluftreifens nebeneinander angeordneten Profilblockreihen 16, 14 und 15 bekannter Art. Dabei sind die Profilblockreihen 14 mit Profilblockelementen 1 und die Profilblockreihen 15 mit Profilblockelementen 2 ausgebildet. Die Profilblockelemente 1 und 2 sind dabei entsprechend den in den Figuren 1 bis 7 dargestellten und/oder oben beschriebenen Weisen ausgeführt.

Die Profilblockelemente 1 und 2 in den Figuren 1 bis 8 dargestellten Ausführungsformen sind in einer weiteren Ausführung in bekannter - jedoch nicht dargestellter - Weise zur Verbesserung der Wintereigenschaften, zusätzlich in ihrer radial äußeren Oberfläche mit Feineinschnitten bekannter Art ausgebildet.

In einer - nicht dargestellten Ausführung - ist viereckige Fläche der zweiten Nutflanke 11 produktionsbedingt nicht exakt eben, sondern leicht gewölbt ausgebildet.

### Bezugszeichenliste

### (Teil der Beschreibung)

- 1: Profilblockelement
- 2: Profilblockelement
- 3: Umfangsrille
- 4: Querrille
- 5: Rillengrund
- 6: Radial äußere Oberfläche
- 7: Flanke
- 8: Flanke
- 9: Nut
- 10: Nutgrund
- 11: Nutflanke
- 12: Nutflanke
- 13: Schnittkonturlinie
- 14: Profilblockreihe
- 15: Profilblockreihe
- 16: Profilblockreihe

## Patentansprüche

1. Fahrzeugluftreifen mit einem profilierten Laufstreifen mit Profilelementen (1,2), die durch eine Rille (3) voneinander getrennt sind, wobei die Rille (3) in radialer Richtung R nach innen hin von einem Rillengrund (5) und beiderseits des Rillengrundes jeweils von einer Rillenwand begrenzt wird, wobei das Profilelement (1) in radialer Richtung nach außen hin durch eine die Bodenkontaktfläche bildende radial äußere Oberfläche (6) und zur Rille hin durch eine eine Rillenwand der Rille (3) bildende Flanke (7) begrenzt wird, welche in radialer Richtung R ausgehend vom Rillengrund (5) der Rille (3) bis zur radial äußeren Oberfläche (6) erstreckt ist, wobei längs der Erstreckung der Rille (3) in der Flanke (7) des Profilelementes (1) hintereinander verteilt an geordnet Nuten (9) ausgebildet sind, welche sich ausgehend von der radial äußeren Oberfläche (6) in radialer Richtung R nach innen hin bis in einen in radialer Richtung R gemessenen Abstand h vom Rillengrund (5) erstrecken und dort enden, wobei die Nut (9) längs ihrer Erstreckung ausgehend von der radial äußeren Oberfläche (6) nach innen hin mit einem Nutgrund (10) und beiderseits des Nutgrundes (10) jeweils von einer Nutflanke (11,12) begrenzt wird, wobei die Kontur des Nutgrundes (10) ein Dreieck mit den Dreieckspunkten A,B,C und den Dreieckseiten AB, AC, BC bildet, wobei Seite BC mit einer Seitenlänge a, die Seite AC mit einer Seitenlänge b und die Seite AB mit einer Seitenlänge c ausgebildet ist, wobei die Seite BC in der radial äußeren Oberfläche (6) ausgebildet ist, wobei AB die erste Nutflanke (12) und AC die zweite Nutflanke (11) zum Nutgrund (10) hin begrenzt, **und wobei der zwischen den Seiten BC und AC eingeschlossene Winkel γ mit γ ≥ 30° und der zwischen BC und AB eingeschlossene Winkel β mit β ≥ 30° ausgebildet ist, dadurch gekennzeichnet,**
**dass** der Abstand h mit (1/6)T_{R} ≤h≤ (0,3T_{R}) ausgebildet ist, wobei T_{R} die Rillentiefe im Erstreckungsabschnitt der Nut (9) ist, und
**dass die Kontur der ersten Nutflanke (12) ein Dreieck bildet mit den Dreieckspunkten B,A und E und den Dreieckseiten BA, BE und AE, wobei BE mit einer Seitenlänge e ausgebildet ist und die Schnittkontur zwischen erster Nutflanke (12) und Flanke (7) des Profilelementes (1) bildet und wobei AE mit einer Seitenlänge d ausgebildet ist.**

2. Fahrzeugluftreifen gemäß den Merkmalen von Anspruch **1,**
wobei die Kontur der zweiten Nutflanke (11) ein Viereck bildet mit den Viereckpunkten C,A,E und F und mit den Viereckseiten AC, AE, CF und EF, wobei EF mit einer Seitenlänge f ausgebildet ist und die Schnittkontur zwischen zweiter Nutflanke (11) und Flanke (7) des Profilelementes (1) bildet und wobei CF mit einer Seitenlänge g ausgebildet ist und die Schnittkontur zwischen zweiter Nutflanke (11) und radial äußerer Oberfläche (6) des Profilelementes (1) bildet.

3. Fahrzeugluftreifen gemäß den Merkmalen von Anspruch **2,**
wobei die Seitenlängen g und d mit g > d ausgebildet sind.

4. Fahrzeugluftreifen gemäß den Merkmalen von einem der Ansprüche **1 bis 3,** wobei der von den Seiten BE und AB eingeschlossene Winkel δ mit 2°≤δ≤10° ausgebildet ist.

5. Fahrzeugluftreifen gemäß den Merkmalen von einem der Ansprüche **2 bis 4,** wobei die Schnittkontur der Nut (9) in der radial äußeren Oberfläche (6) aus den Seiten BC und CF gebildet ist, welche einen Winkel ζ mit 70°≤ζ <150° einschließen.

6. Fahrzeugluftreifen gemäß den Merkmalen von einem oder mehreren der vorangegangenen Ansprüche,
wobei die längs der Erstreckung der Rille (3) hintereinander in der Flanke (7) des Profilelementes (1) ausgebildeten Nuten (9) unmittelbar hintereinander angeordnet sind und dabei mit ihrer Schnittkontur in der radial äußeren Oberfläche (6) insbesondere einen zickzackförmigen Verlauf (13) bilden.

7. Fahrzeugluftreifen gemäß den Merkmalen von einem oder mehreren der vorangegangenen Ansprüche,
wobei die Profilelemente (1,2) Profilblockelemente sind.

## Claims

1. Pneumatic vehicle tyre with a profiled tread comprising profile elements (1, 2), which are separated from one another by a groove (3), wherein the groove (3) is bounded inwards in the radial direction R by a groove base (5) and on both sides of the groove base respectively by a groove wall, wherein the profile element (1) is bounded outwards in the radial direction by a radially outer surface (6), which forms the ground contact area, and towards the groove by a flank (7), which forms a groove wall of the groove (3) and is made to extend in the radial direction R from the groove base (5) of the groove (3) up to the radially outer surface (6), wherein along the extent of the groove (3) slots (9) are formed in the flank (7) of the profile element (1), are arranged distributed one behind the other and extend from the radially outer surface (6) inwardly in the radial direction R to a distance h, measured in the radial direction R, from the groove base (5) and end there, wherein the slot (9) is bounded along its extent from the radially outer surface (6) inwards by a slot base (10) and on both sides of the slot base (10) respectively by a slot flank (11, 12), wherein the contour of the slot base (10) forms a triangle with the triangle points A, B, C and the triangle sides AB, AC, BC, wherein side BC is formed with a side length a, the side AC is formed with a side length b and the side AB is formed with a side length c, wherein the side BC is formed in the radially outer surface (6), wherein AB bounds the first slot flank (12) and AC bounds the second slot flank (11) toward the groove base (10), and wherein the angle γ enclosed between the sides BC and AC is formed with γ ≥ 30° and the angle β enclosed between BC and AB is formed with β ≥ 30°,
**characterized**
**in that** the distance h is formed with (1/6)T_{R} ≤ h ≤ (0.3T_{R}), where T_{R} is the groove depth in the portion of extent of the slot (9), and
**in that** the contour of the first slot flank (12) forms a triangle with the triangle points B, A and E and the triangle sides BA, BE and AE, wherein BE is formed with a side length e and forms the sectional contour between the first slot flank (12) and the flank (7) of the profile element (1) and wherein AE is formed with a side length d.

2. Pneumatic vehicle tyre according to the features of Claim 1,
wherein the contour of the second slot flank (11) forms a rectangle with the rectangle points C, A, E and F and with the rectangle sides AC, AE, CF and EF, wherein EF is formed with a side length f and forms the sectional contour between the second slot flank (11) and the flank (7) of the profile element (1) and wherein CF is formed with a side length g and forms the sectional contour between the second slot flank (11) and the radially outer surface (6) of the profile element (1).

3. Pneumatic vehicle tyre according to the features of Claim 2,
wherein the side lengths g and d are formed with g > d.

4. Pneumatic vehicle tyre according to the features of one of Claims 1 to 3,
wherein the angle δ enclosed by the sides BE and AB is formed with 2° ≤ δ ≤ 10°.

5. Pneumatic vehicle tyre according to the features of one of Claims 2 to 4,
wherein the sectional contour of the slot (9) in the radially outer surface (6) is formed by the sides BC and CF that enclose an angle ζ with 70° ≤ ζ ≤ 150°.

6. Pneumatic vehicle tyre according to the features of one or more of the preceding claims,
wherein the slots (9) formed one behind the other along the extent of the groove (3) in the flank (7) of the profile element (1) are arranged directly one behind the other and thereby form in particular a zigzag path (13) with their sectional contour in the radially outer surface (6).

7. Pneumatic vehicle tyre according to the features of one or more of the preceding claims,
wherein the profile elements (1, 2) are profile block elements.

## Revendications

1. Pneumatique de véhicule avec une bande de roulement profilée avec des éléments de profil (1, 2), qui sont séparés l'un de l'autre par une rainure (3), dans lequel la rainure (3) est limitée en direction radiale R vers l'intérieur par un fond de rainure (5) et de part et d'autre du fond de rainure respectivement par une paroi de rainure, dans lequel l'élément de profil (1) est limité en direction radiale vers l'extérieur par une surface radialement extérieure (6) formant la face de contact avec le sol et vers la rainure par un flanc (7) formant une paroi de rainure de la rainure (3), qui s'étend en direction radiale R depuis le fond de rainure (5) de la rainure (3) jusqu'à la surface radialement extérieure (6), dans lequel des encoches (9) disposées de façon répartie l'une derrière l'autre sont formées dans le flanc (7) de l'élément de profil (1) le long de l'extension de la rainure (3), qui s'étendent en direction radiale R vers l'intérieur depuis la surface radialement extérieure (6) jusqu'à une distance h du fond de rainure (5) mesurée en direction radiale R et s'y terminent, dans lequel l'encoche (9) est limitée le long de son extension depuis la surface radialement extérieure (6) vers l'intérieur par un fond d'encoche (10) et de part et d'autre du fond d'encoche (10) par un flanc d'encoche (11, 12), dans lequel le contour du fond d'encoche (10) forme un triangle avec les trois sommets du triangle A, B, C et les trois côtés du triangle AB, AC, BC, dans lequel le côté BC est formé avec une longueur de côté a, le côté AC avec une longueur de côté b et le côté AB avec une longueur de côté c, dans lequel le côté BC est formé dans la surface radialement extérieure (6), dans lequel AB limite le premier flanc d'encoche (12) et AC le deuxième flanc d'encoche (11) vers le fond d'encoche (10), et dans lequel l'angle γ formé entre les côtés BC et AC est formé avec γ ≥ 30° et l'angle β formé entre BC et AB est formé avec β ≥ 30°,
**caractérisé en ce que** la distance h est formée avec (1/6)T_{R} ≤ h ≤ (0,3T_{R}), dans lequel T_{R} est la profondeur de rainure dans la section d'extension de l'encoche (9), et **en ce que** le contour du premier flanc d'encoche (12) forme un triangle avec les trois sommets du triangle B, A et E et les côtés du triangle BA, BE et AE, dans lequel BE est formé avec une longueur de côté e et forme le contour de coupe entre le premier flanc d'encoche (12) et le flanc (7) de l'élément de profil (1) et dans lequel AB est formé avec une longueur de côté d.

2. Pneumatique de véhicule selon les caractéristiques de la revendication 1, dans lequel le contour du deuxième flanc d'encoche (11) forme un quadrilatère avec les sommets du quadrilatère C, A, E et F et les côtés du quadrilatère AC, AE, CF et EF, dans lequel EF est formé avec une longueur de côté f et forme le contour de coupe entre le deuxième flanc d'encoche (11) et le flanc (7) de l'élément de profil (1) et dans lequel CF est formé avec une longueur de côté g et forme le contour de coupe entre le deuxième flanc d'encoche (11) et la surface radialement extérieure (6) de l'élément de profil (1).

3. Pneumatique de véhicule selon les caractéristiques de la revendication 2, dans lequel les longueurs de côté g et d sont formées avec g > d.

4. Pneumatique de véhicule selon les caractéristiques de l'une quelconque des revendications 1 à 3, dans lequel l'angle δ formé par les côtés BE et AB est formé avec 2° ≤ δ ≤10°.

5. Pneumatique de véhicule selon les caractéristiques de l'une quelconque des revendications 2 à 4, dans lequel le contour de coupe de l'encoche (9) dans la surface radialement extérieure (6) est formé par les côtés BC et CF, qui forment un angle ζ avec 70° ≤ ζ ≤ 150°.

6. Pneumatique de véhicule selon les caractéristiques d'une ou de plusieurs des revendications précédentes, dans lequel les encoches (9) formées l'une derrière l'autre dans le flanc (7) de l'élément de profil (1) le long de l'extension de la rainure (3) sont disposées immédiatement l'une derrière l'autre et forment en l'occurrence avec leur contour de coupe dans la surface radialement extérieure (6) un tracé en particulier en forme de zigzag (13).

7. Pneumatique de véhicule selon les caractéristiques d'une ou de plusieurs des revendications précédentes, dans lequel les éléments de profil (1, 2) sont des éléments de bloc de profil.
